# EUROPEAN PATENT SPECIFICATION

(11) **EP 1 233 008 B1**
(45) Date of publication and mention of the grant of the patent: **30.03.2005**
(21) Application number: 01103977.3
(22) Date of filing: 19.02.2001
(51) Int. Cl.: C04B 22/06, C04B 22/14, C04B 20/04, C04B 22/00

(54) **Cement admixture and cement composition**
Zementzusatzmittel und Zementzusammensetzung
Additif pour ciment et composition de ciment

(43) Date of publication of application: 21.08.2002
(73) Proprietor: DENKI KAGAKU KOGYO KABUSHIKI KAISHA, Chiyoda-ku Tokyo (JP)
(72) Inventor: Morioka, Minoru, Oumi-cho, Nishi-kubiki-gun, Niigata (JP); Nakashima, Yasuhiro, Oumi-cho, Nishi-kubiki-gun, Niigata (JP); Higuchi, Takayuki, Oumi-cho, Nishi-kubiki-gun, Niigata (JP); Ohashi, Hiroyuki, Oumi-cho, Nishi-kubiki-gun, Niigata (JP); Takahashi, Mitsuo, Oumi-cho, Nishi-kubiki-gun, Niigata (JP); Hori, Akihiro, Oumi-cho, Nishi-kubiki-gun, Niigata (JP); Tamaki, Toshiyuki, Oumi-cho, Nishi-kubiki-gun, Niigata (JP); Sakai, Etsuo, Ichikawa-shi, Chiba (JP); Daimon, Masaki, Machida-shi, Tokyo (JP)
(74) Representative: Hartz, Nikolai F., Dr.

(56) References cited:
- US-A- 2 031 621
- US-A- 3 785 844
- US-A- 3 884 710
- DATABASE WPI Section Ch, Week 199111 Derwent Publications Ltd., London, GB; Class A93, AN 1991-076986 XP002171230 & JP 03 023247 A (DENKI KAGAKU KOGYO KK), 31 January 1991 (1991-01-31)
- DATABASE WPI Section Ch, Week 197446 Derwent Publications Ltd., London, GB; Class L02, AN 1974-79954V XP002171206 & JP 49 052217 A (SUMITOMO CEMENT CO), 21 May 1974 (1974-05-21)
- DATABASE WPI Section Ch, Week 199809 Derwent Publications Ltd., London, GB; Class L02, AN 1998-087608 XP002171207 & CN 1 139 079 A (WANG L), 1 January 1997 (1997-01-01)
- DATABASE WPI Section Ch, Week 198239 Derwent Publications Ltd., London, GB; Class L02, AN 1982-83260E XP002171208 & SU 885 194 A (MOSCOW MENDELEEV CHEM IN), 30 November 1981 (1981-11-30)
- DATABASE WPI Section Ch, Week 199922 Derwent Publications Ltd., London, GB; Class A25, AN 1999-261281 XP002171209 & JP 11 079816 A (DENKI KAGAKU KOGYO KK), 23 March 1999 (1999-03-23)
- PATENT ABSTRACTS OF JAPAN vol. 1995, no. 11, 26 December 1995 (1995-12-26) & JP 07 206494 A (DENKI KAGAKU KOGYO KK), 8 August 1995 (1995-08-08)

## Description

The present invention relates to a cement admixture and a cement composition which are to be used mainly in the field of civil engineering and construction.

Reduction of cracks and improvement of the flexural strength of cement concrete are important from the viewpoint of e.g. reliability, durability and beauty of concrete structures, and a further progress in the technology of a cement admixture i.e. a cement expansive admixture, which is effective to improve such performance, is desired.

Heretofore, as a cement admixture which presents expansibility to cement concrete, there has been, for example, a free lime/hauyne/anhydrous gypsum expansive admixture (JP-B-42-21840) or a free lime/calcium silicate/anhydrous gypsum expansive admixture (JP-B-53-31170). Further, a cement admixture containing calcium ferrite and/or calcium aluminoferrite, has also been proposed. For example, JP-A-49-81434 discloses a technique wherein a clinker comprising free lime, and calcium ferrite and/or calcium aluminoferrite, is produced and grinded, and then dihydrate gypsum is mixed thereto.

However, such a cement admixture is not only inadequate in the expansion performance but also poor in the quality stability, as the free lime in the cement admixture is likely to be weathered. In recent years, for the purpose of high performance of concrete, development of highly superplasticized concrete or high strength concrete has been actively carried out. However, with such high performance concrete, it has been pointed out that no adequate effects of an expansive admixture tend to be obtained. Accordingly, it is desired to develop an expansive admixture which is capable of imparting high expansibility even with a small blend ratio of the expansive admixture. Further, when a conventional cement admixture capable of presenting expansibility is used, there has been a further problem that the strength of cement concrete tends to be low due to the expansion. Further, it is desired to develop a cement admixture which is not only capable of preventing a dimensional change due to shrinkage upon drying but also capable of preventing a dimensional change due to heat of hydration.

The present inventors have conducted various studies to solve such problems and as a result, have found it possible to solve such problems by using a certain specific cement admixture. The present invention has been accomplished on the basis of such a discovery.

Namely, the present invention provides a cement admixture which is a substance obtainable by blending a CaO material, a Fe₂O₃ material, a CaSO₄ material and, if necessary, an Al₂O₃ material, followed by heat treatment, and which comprises (1) free lime, (2) calcium ferrite and/or calcium aluminoferrite, and (3) anhydrous gypsum wherein the cement admixture has a silicate ratio of less than 1.0; such a cement admixture which further contains an alkanol amine; such a cement admixture which further contains dextrin; and a cement composition comprising cement and such a cement admixture.

Now, the present invention will be described in detail.

The cement admixture of the present invention is a substance obtainable by blending a CaO material, a Fe₂O₃ material, a CaSO₄ material and, if necessary, an Al₂O₃ material, followed by heat treatment, and comprising (1) free lime, (2) calcium ferrite and/or calcium aluminoferrite, and (3) anhydrous gypsum wherein the cement admixture has a silicate ratio of less than 1.0. The proportions of the respective components are not particularly limited. However, in 100 parts of a clinker comprising free lime, calcium ferrite and/or calcium aluminoferrite, and anhydrous gypsum, the free lime is preferably from 20 to 65 parts, more preferably from 30 to 55 parts, the calcium ferrite and/or calcium aluminoferrite is preferably from 10 to 55 parts, more preferably from 15 to 45 parts, and the anhydrous gypsum is preferably from 5 to 40 parts, more preferably from 10 to 30 parts. If the compositional proportions of the respective compounds in the clinker are not within the above ranges, there may be cases where excellent expansion performance cannot be obtained.

The "parts" and "%" used in this invention to indicate the blend proportions, are represented by mass unit.

In the present invention, the calcium ferrite means a CaO/Fe₂O₃ type compound generally and is not particularly limited. Usually, however, when CaO is represented by C and Fe₂O₃ is represented by F, a compound such as C₂F or CF is well-known. Usually, it may be present in the form of C₂F. In this invention, the calcium ferrite will hereinafter be abbreviated as C₂F.

In the present invention, the calcium aluminoferrite means a CaO/Al₂O₃/Fe₂O₃ type compound generally and is not particularly limited. Usually, however, when CaO is represented by C, Al₂O₃ by A and Fe₂O₃ by F, a compound such as C₄AF or C₆A₂F is well-known. Usually, it may be present in the form of C₄AF. In this invention, the calcium aluminoferrite will hereinafter be abbreviated has C₄AF.

To produce the cement admixture of the present invention, a CaO material, a Fe₂O₃ material, a CaSO₄ material and, if necessary, an Al₂O₃ material, are blended and subjected to heat treatment to obtain a clinker comprising free lime, C₂F and/or C₄AF, and anhydrous gypsum, and the clinker is grinded to obtain the cement admixture. If a part or all of the free lime, C₂F and/or C₄AF, and the anhydrous gypsum, are separately prepared and mixed, the effects obtainable by the present invention, cannot be obtained.

As a method of ascertaining whether or not a cement admixture is one produced by blending a CaO material, a Fe₂O₃ material, a CaSO₄ material and, if necessary, an Al₂O₃ material, followed by heat treatment to obtain a clinker, and grinding the clinker, for example, coarse particles, specifically particles larger than 100 µm, of the cement admixture may be inspected by e.g. a microscope to carry out the compositional analysis, whereby such can easily be ascertained by confirming that free lime, C₂F and/or C₄AF, and anhydrous gypsum exist in the particles.

The temperature for the heat treatment to produce the clinker is preferably within a range of from 1,100 to 1,600°C, more preferably from 1,200 to 1,500°C. If it is lower than 1,100°C, the expansion performance of the resulting cement admixture tends to be inadequate, and if it exceeds 1,600°C, the anhydrous gypsum is likely to be decomposed.

As the CaO material, limestone or slaked lime may, for example, be mentioned. As the Fe₂O₃ material, various industrial by-products so-called molten slag, an industrial by-product so-called rolling scale, and commercially available iron oxide or iron powder, may, for example, be mentioned. As the CaSO₄ material, dihydrate gypsum, semi-hydrate gypsum and anhydrous gypsum may, for example, be mentioned. As the Al₂O₃ material, bauxite and aluminum ash may, for example, be mentioned.

Further, in the present invention, for a part or all of the Fe₂O₃ material or the Al₂O₃ material, iron sulfate, or aluminum hydroxide and/or aluminum sulfate, may also be used.

In these materials, impurities are present. Specifically, impurities such as SiO₂, MgO, TiO₂, P₂O₅, Na₂O, K₂O, CuO and ZnO may be mentioned. They are not particularly problematic within a range not to substantially affect the purpose of the present invention. However, among them, particularly SiO₂ is at a level of a silicate ratio of less than 1.0. If the silicate ratio is 1.0 or higher, there may be a case where excellent expansion performance cannot be obtained. In the present invention, the silicate ratio is calculated by the following formula from the SiO₂ amount, the Al₂O₃ amount and the Fe₂O₃ amount in the clinker.

Silicate ratio = SiO₂/(Al₂O₃+Fe₂O₃)

Further, the SiO₂ amount in the clinker is preferably at most 5.0%, more preferably at most 3.0%. If it exceeds 5.0%, there may be a case where excellent expansion performance cannot be obtained.

The particle size of the cement admixture of the present invention is not particularly limited, but usually, it is preferably from 1,500 to 9,000 cm²/g, more preferably from 2,500 to 4,000 cm²/g by the blaine specific surface area. If the particle size of the cement admixture is less than 1,500 cm²/g, the long-term durability tends to be poor, and if it exceeds 9,000 cm²/g, no adequate expansion performance tends to be obtainable.

In the present invention, it is preferred to employ a grinding aid at the time of grinding the clinker, with a view to improving the grinding efficiency. The grinding aid is not particularly limited, but recently, a grinding aid has been developed which not only improves the grinding efficiency but also has an effect of increasing the strength, and it is advisable to use such a grinding aid. An alkanol amine is known as such a grinding aid having an effect of improving the strength.

The alkanol amine of the present invention is not particularly limited. As a specific example, for example, USP 2,031,621 discloses a technique wherein triethanol amine is employed. JP-A-3-183647 discloses a technique wherein a higher trialkanol amine having a hydroxyl group and an amino group, such as triisopropanol amine, N,N-bis-(2-hydroxyethyl)-N-(2-hydroxypropyl)-amine or tris-(2-hydroxybutyl)-amine, is employed. Further, JP-A-10-324550 discloses an alkanol amine having an ionic functional group other than a hydroxyl group. Specific examples of the alkanol amine having an ionic functional group other than a hydroxyl group, include a 1-(bis-2-hydroxypropylamino)-2-propyl maleic acid ester, a 1-(bishydroxyethyl)amino-2-hydroxy-propylsulfonic acid, sodium 1-(bis-2-hydroxypropyl)aminopropionate, and sodium 1-(bishydroxyethyl)aminopropionate. Further, in the present invention, other than the above-mentioned alkanol amine or its sodium salt, the potassium salt, the calcium salt, the magnesium salt or the ammonium salt, may, for example, be employed.

These alkanol amines have been proposed as a grinding aid for Portland cement clinker. Whereas, the present inventors have found surprisingly that when such alkanol amines are used as an additive or a grinding aid to the clinker at the time of preparing the cement admixture of the present invention, the compressive strength at 28 days old of the cement concrete employing the cement admixture of the present invention increases, and the expansion performance will also be improved.

The amount of the alkanol amine is not particularly limited. However, it is usually preferably employed within a range of from 0.01 to 2 parts, more preferably from 0.05 to 1 part, per 100 parts of the clinker. If it is less than 0.01 part, the grinding efficiency or the strength-increasing effect will not be adequate, and if it exceeds 2 parts, such is not desirable from the economical viewpoint.

In the present invention, in addition to an alkanol amine, dextrin may be incorporated to the clinker which is a substance obtainable by blending a CaO material, a Fe₂O₃ material, a CaSO₄ material and, if necessary, an Al₂O₃ material, followed by heat treatment, and which comprises free lime, calcium ferrite and/or calcium aluminoferrite, and anhydrous gypsum. The dextrin is used for the purpose of suppressing heat of hydration and suppressing a dimensional change due to heat generation. The effect of dextrin for suppressing heat of hydration varies substantially depending upon the solubility. The solubility of the dextrin is represented by the cold water soluble content. Here, the cold water soluble content means the amount dissolved in distilled water of 21°C. Specifically, 10g of dextrin is put into a flask having a capacity of 200 mℓ, and after adding 150 mℓ of distilled water at a temperature of 21°C, maintained at a temperature of 21 ± 1°C for one hour, followed by filtration, and the filtrate is distilled to dryness, whereupon the obtained dextrin is represented by the mass proportion based on the initial dextrin. The cold water soluble content of dextrin capable of providing the effect for suppressing heat of hydration is at most 70%. Accordingly, one having a cold water soluble content within this range is preferred, and more preferred is from about 10 to 60%. However, dextrin having a cold soluble content exceeding 70% has an effect for suppressing a slump loss although the effect for suppressing heat of hydration is low, and accordingly, such dextrin may be used for such a purpose.

The amount of dextrin is not particularly limited. Usually, however, it is preferably from 1 to 10 parts, more preferably from 2 to 7 parts, per 100 parts of the clinker. If it is less than 1 part, the effect for suppressing heat of hydration tends to be inadequate, and if it exceeds 10 parts, setting may sometimes be substantially delayed.

The amount of the cement admixture of the present invention to be used, is not particularly limited. Usually, however, it is preferably from 3 to 12 parts, more preferably from 5 to 9 parts, per 100 parts of a cement composition comprising cement and the cement admixture. If it is less than 3 parts, no adequate expansion performance tends to be obtained, and if it exceeds 12 parts, expansion tends to be excessive.

As the cement for the present invention, various Portland cements such as ordinary, high-early-strength, ultra high-early-strength, low heat and moderate-heat Portland cements, various blended cements having blast furnace slag, fly ash and silica blended to such cements, and a filler cement having limestone powder mixed, may, for example, be mentioned.

In the present invention, one or more among a water reducing agent, a high-range water reducing agent, an AE water reducing agent, a high-range AE reducing agent, a superplasticizer, a defoaming agent, a thickener, an corrosion inhibitor, an antifreezing agent, a shrinkage-reducing agent, a polymer emulsion, a setting accelerator, a setting retarder, a quick hardening admixture for cement, a clay mineral such as bentonite, an anion exchanger such as hydrotalcite, boric acid or its salts, may be used within a range not to substantially hinder the purpose of the present invention.

In the present invention, the method of mixing the respective materials is not particularly limited, and the respective materials may be mixed at the time of application, or a part or all of them may preliminarily be mixed. As the mixing apparatus, any conventional apparatus may be used. For example, an gravity type mixer, an omnimixer, a Henschel mixer, a V-type mixer and a Nauta mixer may, for example, be mentioned.

Now, the present invention will be described in further detail with reference to Examples. However, it should be understood that the present invention is by no means restricted to such specific Examples.

### EXAMPLE 1

A CaO material, an Al₂O₃ material, a Fe₂O₃ material and a CaSO₄ material were blended, mixed and grinded, and then subjected to heat treatment at 1,350°C for 3 hours to obtain a clinker having a composition as identified in Table 1. Using 0.05 part of grinding aid A per 100 parts of the clinker, the clinker was grinded to a blaine specific surface area of 3,500 ± 300 cm²/g by means of a ball mill, to obtain a cement admixture. The cement admixture was identified by a powder X-ray diffraction method, whereby it comprised free lime, C₂F and/or C₄AF, and anhydrous gypsum. The mineral composition of the cement admixture was calculated by a calculation based on the chemical composition. The chemical composition was obtained in accordance with JIS R 5202.

Using the cement admixture in an amount of 7 parts in 100 parts of a cement composition comprising cement and the cement admixture, a mortar was prepared to have a water/cement composition ratio = 47% and a cement composition/sand ratio = 1/3, and the expansion ratio was measured. Further, for the purpose of comparison, similar tests were carried out also with respect to cement admixtures obtained by separately preparing part or all of the free lime, C₂F, C₄AF and the anhydrous gypsum, grinding and blending them to bring the mineral compositions to be the same as in Test No. 1-5, 1-15 and 1-16 for the present invention. The results are shown in Table 1.

### Materials used

CaO material: Calcium carbonate as first grade reagent
Al₂O₃ material: Aluminum oxide as first grade reagent
Fe₂O₃ material: Ferric oxide as first grade reagent
CaSO₄ material: Dihydrate gypsum as first grade reagent
Grinding aid A: Triisopropanol amine
Free lime: Prepared by heat treating the CaO material at 1,350°C for 3 hours.
C₂F: Prepared by mixing and grinding a blend material prepared by blending 2 mol of the CaO material and 1 mol of the Fe₂O₃ material and then heat-treating it at 1,350°C for 3 hours.
C₄AF: Prepared by mixing and grinding a blend material prepared by blending 4 mol of the CaO material, 1 mol of the Al₂O₃ material and 1 mol of the Fe₂O₃ material and then heat treating it at 1,350°C for 3 hours.
Anhydrous gypsum: Anhydrous gypsum obtained by calcining the dihydrate gypsum as first grade reagent at 1,350°C for 3 hours.
Sand: JIS standard sand (in accordance with ISO679)

### Measuring methods

Expansion coefficient: Measured in accordance with JIS A 6202.

**Table 1**

| Test No. | Cement admixture (parts) | | | | Expansion coefficient at material age of 7 days old (×10⁻⁶) | Notes |
|---|---|---|---|---|---|---|
| | Free lime | C₂F | C₄AF | Anhydrous gypsum | | |
| 1-1 | 0 | 0 | 0 | 0 | 10 | Comparative |
| 1-2 | 50 | 0 | 45 | 5 | 800 | Invention |
| 1-3 | 50 | 0 | 40 | 10 | 950 | Invention |
| 1-4 | 50 | 0 | 30 | 20 | 1070 | Invention |
| 1-5 | 50 | 0 | 25 | 25 | 1140 | Invention |
| 1-6 | 50 | 0 | 20 | 30 | 1170 | Invention |
| 1-7 | 50 | 0 | 10 | 40 | 1050 | Invention |
| 1-8 | 65 | 0 | 10 | 25 | 1080 | Invention |
| 1-9 | 55 | 0 | 20 | 25 | 1120 | Invention |
| 1-10 | 45 | 0 | 30 | 25 | 1090 | Invention |
| 1-11 | 35 | 0 | 40 | 25 | 930 | Invention |
| 1-12 | 20 | 0 | 55 | 25 | 670 | Invention |
| 1-13 | 30 | 0 | 45 | 25 | 810 | Invention |
| 1-14 | 40 | 0 | 35 | 25 | 1010 | Invention |
| 1-15 | 60 | 0 | 15 | 25 | 1120 | Invention |
| 1-16 | 50 | 20 | 0 | 30 | 1090 | Invention |
| 1-17 | 50 | 10 | 10 | 30 | 1100 | Invention |
| 1-18 | 50 | 20 | 0 | 30 | 490 | Comparative |
| 1-19 | 50 | 0 | 20 | 30 | 550 | Comparative |
| 1-20 | 50 | 10 | 10 | 30 | 520 | Comparative |
| 1-21 | 50 | 0 | 20 | 30 | 590 | Comparative |
| Test No. 1-1 represents a case where no cement admixture was added. | | | | | | |
| Test No. 1-18 to 1-20 represent cases wherein the free lime, C₂F, C₄AF and the anhydrous gypsum were separately prepared and mixed. | | | | | | |
| Test No. 1-21 represents a case where a clinker comprising the free lime and C₄AF was prepared, and the anhydrous gypsum was mixed thereto. | | | | | | |

From Table 1, it is evident that mortars employing cement admixtures obtained by grinding a clinker prepared by simultaneously calcining the materials of the present invention and comprising the free lime, C₂F and/or C₄AF, and the anhydrous gypsum, exhibit excellent expansion performance as compared with mortars employing cement admixtures of Comparative Examples obtained by separately preparing the free lime, C₂F, C₄AF and the anhydrous gypsum and mixing them.

### EXAMPLE 2

A CaO material, an Al₂O₃ material, a Fe₂O₃ material and a CaSO₄ material, as industrial materials, were blended and calcined at a calcining temperature of 1,400°C by means of a rotary kiln to obtain a clinker having the chemical composition as identified in Table 2. The operation was carried out in the same manner as in Example 1 except that the cement admixture was prepared by using grinding aid A in an amount of 0.05 part per 100 parts of the clinker and carrying out the grinding by means of a ball mill to a blaine specific surface area of 3,500 cm²/g. The mineral composition calculated based on the chemical composition is shown in Table 3.

For the purpose of comparison, the results with respect to the commercially available calcium sulfoaluminate type expansive admixture (hereinafter referred to simply as CSA) and the lime-type expansive admixture (referred to simply as FLE) are also presented. The results of measurement of the expansion coefficient are shown in Table 4.

### Materials used

CaO material: Limestone produced at Oumi Kozan, Niigata Prefecture, Japan
Al₂O₃ material: Bauxite produced in China
Fe₂O₃ material: Rolling scale
CaSO₄ material: Exhaust gas desulfurized dihydrate gypsum
CSA: Commercially available calcium sulfoaluminate type expansive admixture, blaine specific surface area: 2,940 cm²/g
FLE: Commercially available lime type expansive admixture, blaine specific surface area: 3,610 cm²/g

**Table 2**

| Cement admixture | Ignition loss (%) | Chemical composition (%) | | | | | |
|---|---|---|---|---|---|---|---|
| | | SiO₂ | Fe₂O₃ | Al₂O₃ | CaO | SO₃ | Others |
| Present invention | 1.5 | 1.4 | 6.4 | 4.1 | 67.3 | 15.6 | 3.7 |
| CSA | 1.1 | 1.2 | 0.6 | 16.1 | 51.3 | 27.5 | 2.2 |
| FLE | 2.5 | 8.7 | 1.4 | 2.0 | 67.9 | 15.6 | 1.9 |

**Table 3**

| Cement admixture | Mineral composition (%) | | | | |
|---|---|---|---|---|---|
| | Free lime | C₄AF | Anhydrous gypsum | Hauyne | C₃S |
| Present invention | 47.5 | 19.4 | 26.5 | - | 5.3 |
| CSA | 19.0 | 1.8 | 39.8 | 31.3 | 4.6 |
| FLE | 30.8 | 4.4 | 26.5 | - | 25.0 |

**Table 4**

| Test No. | Cement admixture | Amount of SiO₂ (%) | Silicate ratio | Expansion coefficient at material age of 7 days old (×10⁻⁶) | Notes |
|---|---|---|---|---|---|
| 2-1 | Present invention | 1.4 | 0.13 | 1250 | Invention |
| 2-2 | CSA | 1.2 | 0.07 | 470 | Comparative |
| 2-3 | FLE | 8.7 | 2.56 | 410 | Comparative |

From Tables 2, 3 and 4, it is evident that mortars employing cement admixtures of the present invention exhibit distinctly superior expansion performance as compared with mortars employing commercially available expansive admixtures.

### EXAMPLE 3

The operation was carried out in the same manner as in Example 2 except that measurements of the expansion coefficient and the compressive strength were carried out by changing the type and amount of the grinding aid. The results are shown in Table 5.

### Materials used

Grinding aid B: Triethanolamine
Grinding aid C: 1-(bis-2-hydroxypropylamino)-2-propyl maleic acid ester
Grinding aid D: Diethylene glycol

### Measuring methods

Compressive strength: Measured in accordance with JIS R 5201.

**Table 5**

| Test No. | Grinding aid (parts) | Expansion coefficient at material age of 7 days old (×10⁻⁶) | Compressive strength at material age of 28 days old (N/mm²) | Notes |
|---|---|---|---|---|
| 3-1 | 0 | 1020 | 41.5 | Invention |
| 3-2 | A 0.01 | 1210 | 51.0 | Invention |
| 2-1 | A 0.05 | 1250 | 55.5 | Invention |
| 3-3 | A 0.1 | 1270 | 58.0 | Invention |
| 3-4 | A 0.5 | 1280 | 59.0 | Invention |
| 3-5 | A 1.0 | 1300 | 59.5 | Invention |
| 3-6 | A 2.0 | 1320 | 60.0 | Invention |
| 3-7 | B 0.05 | 1210 | 51.0 | Invention |
| 3-8 | C 0.05 | 1240 | 54.5 | Invention |
| 3-9 | D 0.05 | 1070 | 45.0 | Invention |

From Table 5, it is evident that the mortar employing the cement admixture of the present invention having a grinding aid incorporated, exhibits excellent expansion performance and compressive strength as the amount of the grinding aid increases.

### EXAMPLE 4

A cement admixture was prepared by blending a dextrin having a cold water soluble content as shown in Table 6 in a proportion as shown in Table 6 per 100 parts of the clinker. The operation was carried out in the same manner as in Example 2 except that the expansion coefficient, the compressive strength and the adiabatic temperature rise were measured by using the cement admixture in an amount of 6 parts per 100 parts of the cement composition comprising cement and the cement admixture. The results are shown in Table 6.

### Materials used

Dextrin ①: Cold water soluble content of 5%
Dextrin ②: Cold water soluble content of 10%
Dextrin ③: Cold water soluble content of 20%
Dextrin ④: Cold water soluble content of 30%
Dextrin ⑤: Cold water soluble content of 50%
Dextrin ⑥: Cold water soluble content of 60%
Dextrin ⑦: Cold water soluble content of 70%

### Measuring method

Adiabatic temperature rise: Three litters of a mortar was put into a blowing styrol container, and a thermo couple was disposed at the center of the mortar, and the temperature was measured. The difference between the maximum temperature reached and the temperature upon mixing, of the mortar, was taken as the adiabatic temperature rise.

**Table 6**

| Test No. | Dextrin (parts) | Expansion coefficient at material age of 7 days old (×10⁻⁶) | Compressive strength at material age of 28 days old (N/mm²) | Adiabatic temperature rise (°C) | Notes |
|---|---|---|---|---|---|
| 2-1 | 0 | 1250 | 55.5 | 31.0 | Invention |
| 4-1 | ③ 1 | 1250 | 56.0 | 30.0 | Invention |
| 4-2 | ③ 2 | 1260 | 56.5 | 29.0 | Invention |
| 4-3 | ③ 3 | 1280 | 57.0 | 28.5 | Invention |
| 4-4 | ③ 5 | 1300 | 58.0 | 28.0 | Invention |
| 4-5 | ③ 7 | 1270 | 57.5 | 27.5 | Invention |
| 4-6 | ③ 10 | 1240 | 56.0 | 27.0 | Invention |
| 4-7 | ① 5 | 1270 | 56.5 | 30.0 | Invention |
| 4-8 | ② 5 | 1290 | 57.0 | 29.0 | Invention |
| 4-9 | ④ 5 | 1280 | 57.5 | 28.5 | Invention |
| 4-10 | ⑤ 5 | 1260 | 56.5 | 29.0 | Invention |
| 4-11 | ⑥ 5 | 1230 | 56.0 | 29.5 | Invention |
| 4-12 | ⑦ 5 | 1200 | 55.0 | 30.0 | Invention |

From Table 6, it is evident that mortars employing the cement admixtures of the present invention having dextrins incorporated, not only exhibit excellent expansion performance and compressive strength but also exhibit excellent effects for suppressing heat of hydration, as the adiabatic temperature rise lowers.

### EXAMPLE 5

The operation was carried out in the same manner as in Example 2 except that using the cement admixture used in Test No. 2-1 in Example 2 and changing the amount of the cement admixture as shown in Table 7. The results are shown in Table 7.

**Table 7**

| Test No. | Cement admixture (parts) | Expansion coefficient at material age of 7 days old (×10⁻⁶) | Notes |
|---|---|---|---|
| 5-1 | 0 | 10 | Comparative |
| 5-2 | 3 | 470 | Invention |
| 5-3 | 5 | 720 | Invention |
| 2-1 | 7 | 1250 | Invention |
| 5-4 | 9 | 2080 | Invention |
| 5-5 | 12 | 3150 | Invention |

From Table 7, it is evident that as the amount of the cement admixture of the present invention increases, the expansion performance will be excellent.

By using the cement admixture of the present invention, it is possible to obtain a cement composition which has excellent expansion performance and a strength-development, and which further has an effect for suppressing the heat of hydration.

## Claims

1. A cement admixture which is a substance obtainable by blending a CaO material, a Fe₂O₃ material, a CaSO₄ material and, if necessary, an Al₂O₃ material, followed by heat treatment, and which comprises
(1) free lime,
(2) calcium ferrite and/or calcium aluminoferrite, and
(3) anhydrous gypsum,
wherein the cement admixture has a silicate ratio of less than 1.0.

2. The cement admixture according to Claim 1, which further contains an alkanolamine.

3. The cement admixture according to Claim 1 or 2, which further contains dextrin.

4. A cement composition comprising cement and the cement admixture as defined in any one of Claims 1 to 3.

5. Use of a cement admixture according to any one of claims 1 to 3 for the preparation of a cement composition.

## Patentansprüche

1. Zementzusatzmittel, das eine Substanz ist, erhältlich durch Mischen eines CaO-Materials, eines Fe₂O₃-Materials, eines CaSO₄-Materials und, wenn erforderlich, eines Al₂O₃-Materials und nachfolgender Hitzebehandlung, und das umfasst
(1) freien Kalk,
(2) Calciumferrit und/oder Calciumaluminoferrit, und
(3) wasserfreien Gips,
wobei das Zementzusatzmittel ein Silikatverhältnis von weniger als 1,0 aufweist.

2. Zementzusatzmittel nach Anspruch 1, das ferner ein Alkanolamin enthält.

3. Zementzusatzmittel nach Anspruch 1 oder 2, das ferner Dextrin enthält.

4. Zementzusammensetzung, umfassend Zement und das in einem der Ansprüche 1 bis 3 definierte Zementzusatzmittel.

5. Verwendung eines Zementzusatzmittels nach einem der Ansprüche 1 bis 3 zur Herstellung einer Zementzusammensetzung.

## Revendications

1. Additif pour ciment, lequel est une substance pouvant être obtenue en mélangeant un matériau de CaO, un matériau de Fe₂O₃, un matériau de CaSO₄ et, si nécessaire, un matériau de Al₂O₃, opération suivie d'un traitement thermique, et qui comprend
(1) de la chaux libre,
(2) du ferrite de calcium et/ou de l'aluminoferrite de calcium, et
(3) du gypse anhydre,
l'additif pour ciment ayant un rapport de silicate inférieur à 1,0.

2. Additif pour ciment selon la revendication 1, contenant en outre une alcanolamine.

3. Additif pour ciment selon la revendication 1 ou 2, contenant en outre une dextrine.

4. Composition de ciment comprenant du ciment et l'additif pour ciment tel que défini dans l'une quelconque des revendications 1 à 3.

5. Utilisation d'un additif pour ciment selon l'une quelconque des revendications 1 à 3 pour la préparation d'une composition de ciment.
